# FASCICULE DE BREVET EUROPEEN

(11) **EP 2 982 229 B1**
(45) Date de publication et mention de la délivrance du brevet: **27.12.2023**
(21) Numéro de dépôt: 15180073.7
(22) Date de dépôt: 06.08.2015
(51) Int. Cl.: A01C 5/06, B60C 7/12

(54) **OUTIL AGRICOLE À PNEUMATIQUE AMÉLIORÉ**
LANDWIRTSCHAFTLICHES WERKZEUG MIT VERBESSERTEM REIFEN
AGRICULTURAL TOOL WITH AN IMPROVED PNEUMATIC

(30) Priorité: 07.08.2014 FR 1457670
(43) Date de publication de la demande: 10.02.2016
(73) Titulaire: OTICO, 77650 Chalmaison (FR)
(72) Inventeur: PHELY, Olivier, 77520 Thénisy (FR); PIOU, Denis, 89340 Villeblevin (FR)
(74) Mandataire: Cabinet Netter

(56) Documents cités:
- EP-A1- 2 145 775
- DE-A1-102004 007 601
- FR-A1- 2 776 239
- US-A- 3 029 857

## Description

L'invention relève du domaine des machines agricoles, en particulier des outils agricoles pourvus d'au moins un pneumatique.

Parmi les machines agricoles, il existe des semoirs comprenant divers outils travaillant les uns à la suite des autres : un organe de tête, typiquement un soc, un disque ou une dent, est agencé pour ouvrir d'abord un sillon dans le sol ; ensuite un organe de dépôt est agencé pour amener une semence ou une graine au fond du sillon ; enfin, une ou plusieurs roues de queue ferment le sillon et/ou tassent la terre.

Certains semoirs comprennent en outre un outil agricole tel qu'une roue de plombage pour appuyer et/ou enfouir la graine au fond du sillon. Cette roue de plombage intervient entre l'organe de dépôt de graine et les roues de queue fermant le sillon. Les roues de plombage connues présentent généralement un rapport hauteur sur largeur élevé pour pouvoir rouler sur le fond du sillon. Une telle roue de plombage est connue de EP 2 145 775 A1.

Compte tenu de leur rapport hauteur sur largeur, les roues de plombage sont particulièrement sensibles au phénomène de flambage. Le pneumatique de la roue de plombage tend à se courber latéralement. Ceci entraîne d'une part la dégradation des sillons et d'autre part l'usure rapide du pneumatique. En outre, la force de compression appliquée en fond de sillon rend la section du pneumatique particulièrement instable. Enfin, en utilisation, les outils de plombage sont particulièrement sensibles aux irrégularités éventuelles ou aux cailloux présents dans les sillons.

La Demanderesse s'est fixé comme objectif d'améliorer la situation.

Elle propose un outil agricole selon la revendication 1.

Un tel outil permet de transmettre la force nécessaire pour appuyer les graines dans la terre tout en présentant un amortissement important propre à encaisser les irrégularités éventuelles du sol lors du roulage. Le risque d'apparition de flambage est limité et le comportement en fonctionnement du pneumatique est stabilisé. En utilisation, le pneumatique préserve la forme des sillons. Les sillons sont peu, ou pas, dégradés. Le comportement dynamique de tels pneumatiques est mieux maîtrisé, ce qui permet de ralentir leur usure et d'augmenter leur durée de vie. À des vitesses de travail élevées, par exemple à environ 17 kilomètres par heure, la transmission des chocs depuis le pneumatique vers le reste du semoir est limitée. Les vibrations et la fatigue de la machine sont réduites.

Appuyer les graines dans la terre signifie, ici, soit de les enfouir à faible profondeur soit de les enfoncer légèrement, sans les recouvrir de terre, pour les y fixer. La force d'appuyage et la profondeur d'enfouissement sont adaptées en fonction des particularités agronomiques des cultures mises en oeuvres.

L'outil peut présenter les caractéristiques optionnelles suivantes, seules ou en combinaison les unes avec les autres :
- L'encombrement en largeur de l'enveloppe du pneumatique est inférieur à 50 millimètres. Dans ce cas, le pneumatique peut venir appuyer les graines au fond des sillons les plus fins obtenus avec des semoirs existants. L'encombrement en largeur peut même être inférieur à 35 ou 30 millimètres.
- Les deux flancs comprennent chacun une partie interne et une partie externe. La partie externe délimite en partie l'enveloppe. La partie interne appartient à la partie intercalaire et relie l'enveloppe à la semelle en s'étendant dans le prolongement de la partie externe respective. La semelle, la partie interne de chacun des deux flancs et une partie de l'enveloppe définissent conjointement un espace annulaire de la structure évidée. Le profil d'un tel pneumatique est alors sensiblement constant sur la circonférence. Sa fabrication en est facilitée. En outre, la surface extérieure de chaque flanc peut être rendue continue. L'insertion de terre et de débris en utilisation est empêchée. Le souillage du pneumatique par la terre est réduit.
- La partie interne de chacun des deux flancs présente une configuration agencée pour fléchir vers l'espace annulaire sous l'effet d'une charge lors du fonctionnement. La déformation du pneumatique en sa circonférence est sensiblement continue au cours du roulage. L'homogénéité de la pression exercée par l'outil sur les graines est améliorée.
- La partie intercalaire comprend des liaisons en forme de rayons reliant chacune la semelle à l'enveloppe. La déformation de la partie intercalaire est alors assurée par des liaisons plutôt que par des parois. Les liaisons présentent une meilleure indépendance les unes par rapport aux autres. Ainsi, si le pneumatique roule sur un obstacle tel qu'un caillou, la liaison active au-dessus du caillou encaissera le choc presque à elle seule. Le fonctionnement des portions voisines du pneumatique est peu ou pas impacté.
- Les liaisons sont réparties dans la circonférence du pneumatique et espacées les unes des autres. Deux liaisons adjacentes, la semelle et une portion de l'enveloppe forment conjointement un espace ajouré de la structure évidée. Les structures évidées permettent d'alléger le pneumatique et de le rendre plus maniable, en particulier sur des terrains accidentés.
- Chacune des liaisons présente une configuration agencée pour fléchir vers un espace ajouré du pneumatique sous l'effet d'une charge lors du fonctionnement. L'initiation du mouvement de fléchissage de la liaison est alors mieux maîtrisé, en particulier lorsque le pneumatique rencontre un obstacle sévère tel qu'un caillou ou une motte de terre.

Selon un autre aspect de l'invention, la Demanderesse propose un semoir équipé d'un outil agricole tel que décrit ci-avant et pour lequel le pneumatique est monté sur un corps de roue.

D'autres caractéristiques, détails et avantages de l'invention apparaîtront à la lecture de la description détaillée ci-après, et des dessins annexés, sur lesquels :
- la figure 1 montre une vue en perspective d'un outil selon un premier mode de réalisation de l'invention,
- la figure 2 montre une vue de côté de l'outil de la figure 1,
- la figure 3 montre une vue en coupe selon le double-segment III-III de la figure 1,
- la figure 4 montre une vue similaire à la figure 3 sur laquelle seule une partie du pneumatique est représentée,
- la figure 5 représente une section du pneumatique de l'outil de la figure 1,
- la figure 6 montre une vue en perspective d'un outil selon un second mode de réalisation de l'invention, seul le pneumatique étant représenté,
- la figure 7 montre une vue de côté du pneumatique de la figure 6,
- la figure 8 montre une vue en perspective d'une coupe du pneumatique de la figure 6,
- la figure 9 montre une vue en coupe selon le segment IX-IX de la figure 7, et
- la figure 10 montre une vue générale d'un semoir équipé d'un outil selon l'invention.

Les dessins et la description ci-après contiennent, pour l'essentiel, des éléments de caractère certain. Ils pourront donc non seulement servir à mieux faire comprendre la présente invention mais aussi contribuer à sa définition, le cas échéant. Il est relevé que des éléments comme la géométrie de pneumatiques sont difficiles à définir complètement, autrement que par le dessin.

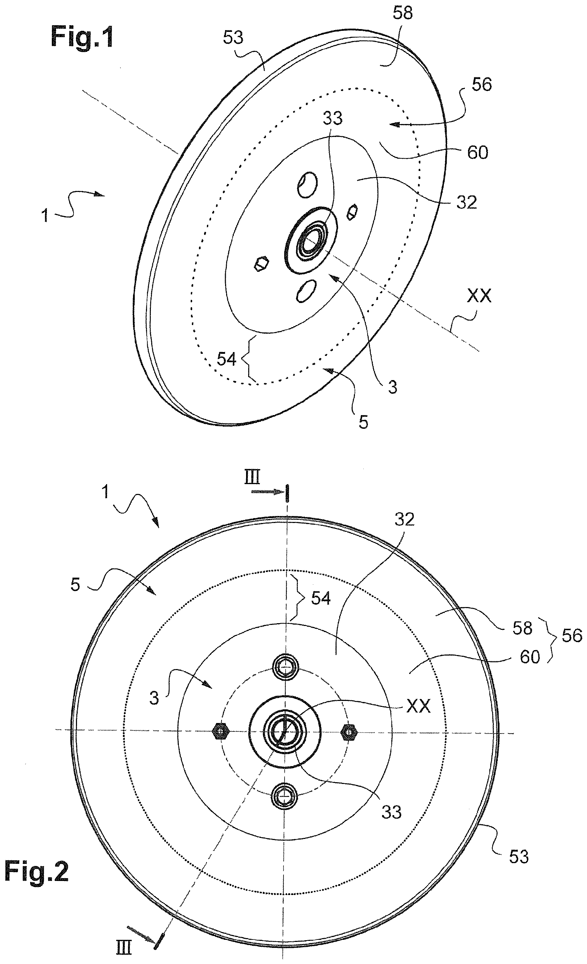

Les figures 1 à 5 représentent un premier mode de réalisation. Elles montrent un outil 1 de travail en champ sous la forme d'une roue. La roue comprend un corps de roue 3 autour duquel est monté un pneumatique 5.

Dans l'exemple décrit ici, le corps de roue 3 comprend deux flasques 31, 32 assemblés l'un avec l'autre. Les deux flasques 31, 32 sont sensiblement le symétrique l'un de l'autre par rapport à leur plan de jonction. À l'état monté l'un sur l'autre, les deux flasques 31, 32 du corps de roue 3 logent un bloc de roulement 33 connu en tant que tel. L'assemblage des deux flasques 31, 32 et du bloc de roulement 33 définit un axe de révolution XX du corps de roue 3. L'axe XX correspond sensiblement à l'axe de rotation de la roue en fonctionnement. Le bloc de roulement 33 présente un alésage sensiblement cylindrique ouvert à chacune de ses extrémités pour le montage du corps de roue 3 autour d'un arbre de roue.

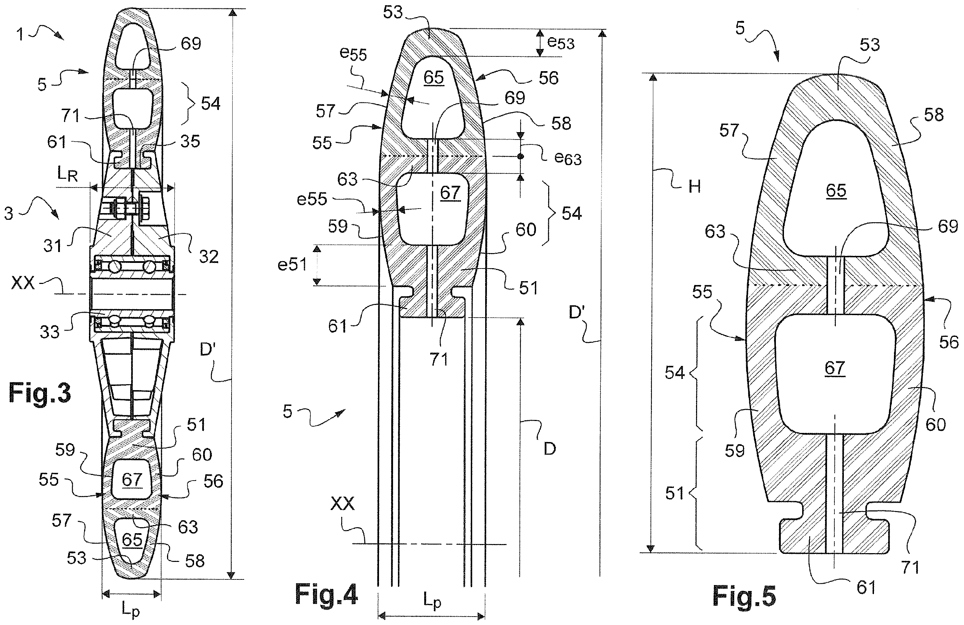

Comme représenté en figure 3, le corps de roue 3, à l'état monté, présente un encombrement en largeur L_{R}, ou largeur maximale. Dans l'exemple décrit ici, la portion centrale du corps de roue 3 logeant le bloc de roulement 33 correspond à la partie la plus large du corps de roue 3.

En périphérie du corps de roue 3, les deux flasques 31, 32 définissent entre eux une gorge 35. La gorge 35 s'étend sensiblement sur la circonférence du corps de roue 3. Elle est conformée pour recevoir le pneumatique 5. Dans l'exemple décrit ici, la conformation de la gorge 35 est adaptée pour fixer un talon 61 du pneumatique 5. Les extrémités radiales des flasques 31, 32 se rabattent l'une vers l'autre de manière à former des crochets de rétention du talon 61. Dans cette configuration, le démontage du pneumatique 5 s'effectue en désolidarisant les deux flasques 31, 32 l'un de l'autre. À l'état monté, le déjantage, c'est-à-dire la séparation accidentelle du pneumatique 5 et du corps de roue 3 est empêchée.

Dans des variantes, d'autres systèmes d'accrochage du pneumatique 5 autour du corps de roue 3 peuvent être utilisés. Par exemple, le corps de roue 3 peut présenter une surface périphérique sensiblement cylindrique et le pneumatique 5 être monté à force. En variante, le corps de roue 3 peut être réalisé d'une seule pièce ou par l'assemblage de plus de deux pièces.

Les flasques 31, 32 sont, par exemple, réalisés à base de matériaux métalliques ou plastiques, en fonction des conditions d'utilisation prévues.

Le pneumatique 5 comprend une partie de type semelle 51, une partie du type bande de roulement 53 et deux flancs 55, 56.

Le pneumatique 5 se monte sur le corps de roue 3 par l'intermédiaire de la semelle 51. La semelle 51 présente une forme sensiblement annulaire s'étendant selon la circonférence du pneumatique 5. La semelle 51 présente une section radiale, telle que représentée en figure 5, sensiblement constante sur la circonférence. Dans une direction radiale, la semelle 51 forme une partie interne du pneumatique 5. À l'état monté sur le corps de roue 3, la semelle 51 forme la partie du pneumatique 5 la plus proche de l'axe XX.

Dans l'exemple décrit ici, la semelle 51 comprend, du côté interne, le talon 61. À l'état logé dans la gorge 35 du corps de roue 3, le talon 61 est invisible depuis l'extérieur. La semelle 51 comprend en outre une partie externe maintenue autour du corps de roue 3 à l'état monté. La partie externe et le talon 61 de la semelle 51 sont mutuellement délimités par deux rainures sensiblement annulaires dans chaque face latérale. Les deux rainures coopèrent avec les crochets de rétention des flasques 31, 32 pour attacher le pneumatique 5 au corps de roue 3.

En fonctionnement, la semelle 51 est sensiblement fixe par rapport au corps de roue 3. En fonctionnement, la semelle 51 est sensiblement indéformable par comparaison avec les autres parties du pneumatique 5 décrites ci-après.

La bande de roulement 53 présente une forme sensiblement annulaire s'étendant selon la circonférence du pneumatique 5. Dans un état au repos, la semelle 51 et la bande de roulement 53 sont sensiblement concentriques et centrées sur l'axe XX. La bande de roulement 53 entoure sensiblement la semelle 51. La bande de roulement 53 présente une section radiale, telle que représentée en figure 5, sensiblement constante sur la circonférence. Dans une direction radiale, la bande de roulement 53 forme une partie externe du pneumatique 5. Vu selon une section radiale du pneumatique 5 telle que représentée en figure 5, la bande de roulement 53 est sensiblement à l'opposé de la semelle 51. À l'état monté sur le corps de roue 3, la bande de roulement 53 forme la partie du pneumatique 5 la plus éloignée de l'axe XX.

Dans l'exemple décrit ici, la bande de roulement 53 porte une surface périphérique externe. La surface périphérique externe est destinée à venir au contact du sol lors du roulage. Dans le cas d'une utilisation de l'outil 1 en tant que roue de plombage pour l'enfouissement de graines, la surface périphérique externe de la bande de roulement 53 est destinée à venir rouler contre le fond d'un sillon pour y appuyer des graines.

Dans l'exemple décrit ici, la bande de roulement 53 présente une épaisseur sensiblement constante. La bande de roulement 53 présente un profil radial sensiblement convexe et arrondi vers l'extérieur. Dans des variantes, les formes et dimensions de la bande de roulement 53 sont adaptées en fonction du type de graines et des propriétés des sols travaillés.

Les flancs 55 et 56 sont sensiblement le symétrique l'un de l'autre selon un plan médian du pneumatique 5 perpendiculaire à l'axe XX.

Le pneumatique 5 comprend une partie intercalaire 54. La partie intercalaire 54 comprend une paroi intermédiaire 63.

La paroi intermédiaire 63 présente une forme sensiblement annulaire s'étendant selon la circonférence du pneumatique 5. Dans un état au repos, la paroi intermédiaire 63 est sensiblement concentrique avec la semelle 51, ave la bande de roulement 53 et centrée sur l'axe XX. La paroi intermédiaire 63 s'étend sensiblement entre la bande de roulement 53 et la semelle 51. La paroi intermédiaire 63 présente une section radiale, telle que représentée en figure 5, sensiblement constante sur la circonférence.

Dans le mode de réalisation des figures 1 à 5, chacun des flancs 55 et 56 s'étend de la semelle 51 à la bande de roulement 53. Chacun des flancs 55 et 56 comprend une partie externe 57, respectivement 58, et une partie interne 59, respectivement 60. La partie externe 57, 58 et la partie interne 59, 60 s'étendent respectivement dans le prolongement l'une de l'autre. La paroi intermédiaire 63 relie les flancs 55, 56 l'un à l'autre au raccordement de la partie externe 57, 58 avec la partie interne 59, 60 correspondante de chacun des flancs 55, 56. La paroi intermédiaire 63 forme ainsi une partie intérieure du pneumatique 5, invisible depuis l'extérieur. Vu de l'extérieur et dans un état au repos du pneumatique 5, les surfaces extérieures des deux flancs 55, 56 sont sensiblement continues entre la partie externe 57, 58 et la partie interne 59, 60 respective. Sur les figures, un trait en pointillés représente la délimitation entre les deux parties de chaque flanc 55, 56 et la position de la paroi intermédiaire 63.

Les parties externes 57 et 58 des flancs 55 et 56, la bande de roulement 53 et la paroi intermédiaire 63 définissent conjointement une enveloppe autour d'une chambre 65. La chambre 65 forme un espace creux sensiblement annulaire à l'intérieur du pneumatique 5 et situé dans la moitié radialement externe de la section du pneumatique 5.

Dans l'exemple décrit ici, la chambre 65 est non gonflée. La chambre 65 est en communication fluidique avec l'environnement extérieur. Grâce à cette absence d'étanchéité volontaire, une déformation modérée de l'enveloppe facilite le décollement de la terre qui pourrait adhérer aux surfaces extérieures. La déformation peut être générée lors du roulage en fonctionnement ou à l'arrêt lors d'opérations d'entretien du matériel.

Dans l'exemple représenté en figure 5, la communication fluidique est permise par un orifice 69. L'orifice 69 traverse la paroi intermédiaire 63 et débouche d'une part dans la chambre 65 et d'autre part dans un espace annulaire 67 décrit ensuite. L'orifice 69 utilisé lors de la vulcanisation peut donc subsister. L'orifice 69 constitue une exception à l'homogénéité circonférentielle du pneumatique 5.

La partie intercalaire 54 comprend, outre la paroi intermédiaire 63, les parties internes 59 et 60 des flancs 55 et 56. Les parties internes 59 et 60 des flancs 55 et 56 relient la paroi intermédiaire 63 à la semelle 51. La paroi intermédiaire 63, les parties internes 59 et 60 des flancs 55 et 56 et la semelle 51 définissent conjointement une enveloppe supplémentaire autour de l'espace annulaire 67. L'espace annulaire 67 forme un espace creux à l'intérieur du pneumatique 5, situé dans la moitié radialement interne de la section du pneumatique 5. La partie intercalaire 54 présente donc une structure évidée.

Dans l'exemple décrit ici, l'espace annulaire 67 est non gonflé. L'espace annulaire 67 est en communication fluidique avec l'environnement extérieur. Grâce à cette absence d'étanchéité volontaire, la déformation de la partie intercalaire 54 est facilitée. Dans l'exemple représenté en figure 5, la communication fluidique est permise par un orifice 71. L'orifice 71 traverse la semelle 51 et débouche d'une part dans l'espace annulaire 67 et d'autre part dans un espace intercalaire entre les deux flasques 31, 32 du corps de roue 3. L'orifice 71 utilisé lors de la vulcanisation, comme l'orifice 69, peut donc subsister. L'orifice 71 constitue aussi une exception à l'homogénéité circonférentielle du pneumatique 5. La chambre 65 est, ici, en communication fluidique avec l'extérieure via l'espace annulaire 67.

Dans l'exemple du premier mode de réalisation représenté sur les figures 1 à 5, à l'état au repos, le pneumatique 5 présente :
- un diamètre intérieur D compris entre 50 et 160 millimètres, par exemple environ 132 millimètres,
- un diamètre extérieur D' compris entre 250 et 350 millimètres, par exemple environ 300 millimètres,
- un encombrement en largeur L_{P} compris entre 25 et 40 millimètres, par exemple environ 31 millimètres,
- une bande de roulement 53 d'épaisseur e₅₃ comprise entre 4 et 10 millimètres, par exemple environ 8 millimètres,
- une semelle 51, d'épaisseur e₅₁ comprise entre 10 et 14 millimètres, par exemple environ 12 millimètres, hors talon 61,
- une paroi intermédiaire 63 d'épaisseur e₆₃ comprise entre 6 et 12 millimètres, par exemple environ 8 millimètres,
- des flancs 55, 56 d'épaisseur e₅₅, e₅₆ comprise entre 3 et 7 millimètres, par exemple environ 5 millimètres, et
- une section de hauteur H comprise entre 70 et 100 millimètres, par exemple environ 85 millimètres, talon 61 compris.

L'encombrement en largeur L_{R} du corps de roue 3 est ici compris entre 40 et 50 millimètres, par exemple environ 44 millimètres. Les orifices 69 et 71 présentent un alésage sensiblement cylindrique de diamètre compris entre 2 et 4 millimètres, par exemple environ 3 millimètres.

Les épaisseurs sont représentées sur les figures. Des zones de raccordement entre les différentes parties du pneumatique 5 permettent d'éviter de brusques variations d'épaisseur et d'éventuelles concentrations de contraintes qui pourraient en résulter.

Le pneumatique 5 du premier mode de réalisation est, ici, réalisé par l'assemblage de deux parties extrudées séparément. Les deux parties extrudées séparément sont ensuite vulcanisées ensemble. Sur les vues en coupe, un trait en pointillé représente la surface d'assemblage des deux parties, sensiblement au milieu de la paroi intermédiaire 63. En variante, le pneumatique 5 est obtenu après une co-extrusion de l'ensemble du profil. En outre, les deux parties sont, ici, réalisées en deux matériaux différents. La réalisation d'un pneumatique bi-matériau peut être mise en oeuvre, par exemple, par deux extrusions distinctes suivies d'une vulcanisation commune ou par une co-extrusion bi-matériau. À l'état terminé, le pneumatique 5 est d'un seul tenant.

Dans l'exemple décrit ici, la partie radialement intérieure, correspondant à la partie intercalaire 54 et à la semelle 51, est réalisée à base d'un caoutchouc de dureté Shore A comprise entre 55 et 70, par exemple environ 63 Shore. La partie radialement extérieure, correspondant à l'enveloppe extérieure, est réalisée à base d'un caoutchouc de dureté Shore comprise entre 35 et 50, par exemple environ 43 Shore. Réaliser l'enveloppe externe et la partie intercalaire 54 en deux matériaux distincts permet d'affiner encore leur comportement dynamique respectif.

Qu'il soit réalisé avec une ou plusieurs extrusions, le pneumatique peut en variante être réalisé d'un unique matériau.

Les valeurs dimensionnelles et de dureté Shore données ci-avant sont particulièrement adaptées au comportement dynamique souhaité par la Demanderesse dans l'application prévue. Ces valeurs pourront être adaptées individuellement ou conjointement en fonction des applications prévues. La combinaison des structures et des propriétés des matériaux permettent de sélectionner précisément les déformations souhaitées en fonction des applications. Par exemple, la dureté du matériau de la partie intercalaire 54 peut être inférieure ou sensiblement égale à la dureté de la partie radialement extérieure. La dureté constitue un paramètre parmi d'autres tels que la forme, la structure et les dimensions, pour conférer au pneumatique le comportement en affaissement prévu. En outre, d'autres élastomères peuvent être utilisés, par exemple des polyuréthanes.

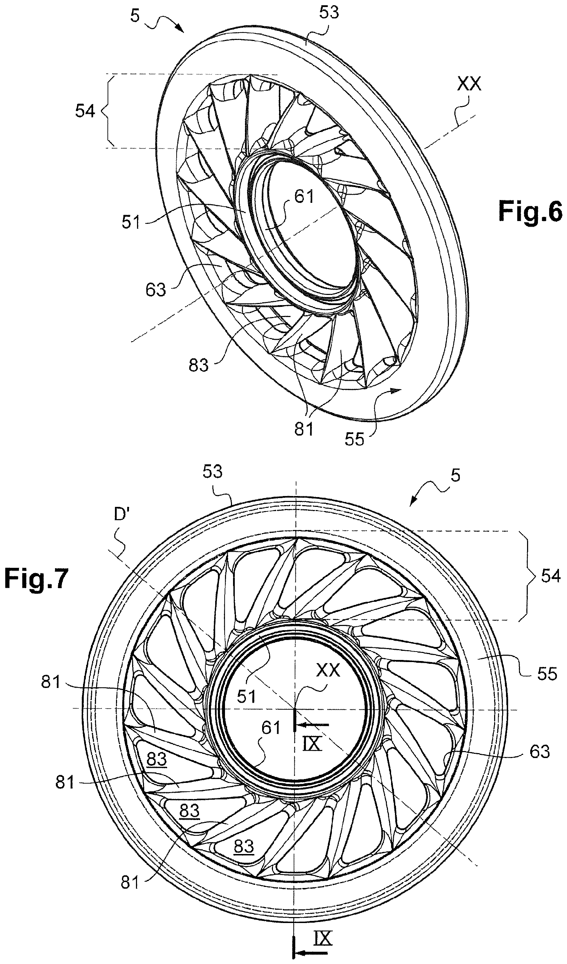

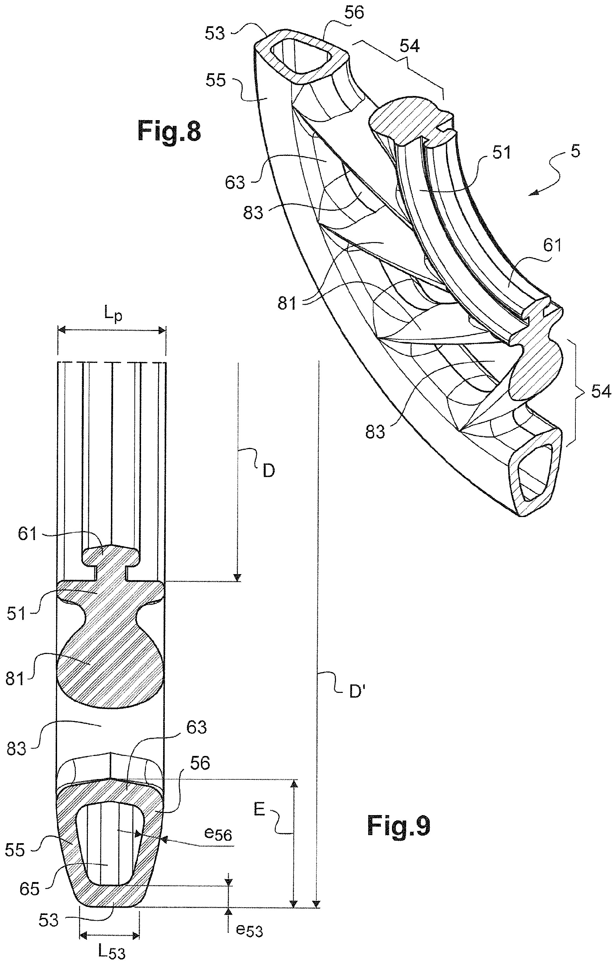

Il est maintenant fait référence au second mode de réalisation représenté aux figures 6 à 9. Les éléments similaires à ceux du premier mode de réalisation portent des références numériques identiques. Le second mode de réalisation se différencie du premier notamment en ce que la partie intercalaire 54 est dépourvue de parties internes 59 et 60 des flancs 55 et 56. La partie intercalaire 54 est dépourvue de flanc. La partie intercalaire 54 comprend, outre une paroi intermédiaire 63, des liaisons 81 en forme de rayons.

Chacune des liaisons 81 relie la semelle 51 à l'enveloppe externe. Chacune des liaisons 81 s'étend entre une surface orientée vers l'axe XX de la paroi intermédiaire 63 et une surface en regard de la semelle 51.

Les liaisons 81 constituent des exceptions à l'homogénéité circonférentielle du pneumatique 5. Autrement dit, la forme de la section du pneumatique 5 dépend de la position angulaire considérée. Les liaisons 81 sont réparties dans la circonférence du pneumatique 5. Les liaisons 81 sont espacées les unes des autres. Deux liaisons 81 adjacentes définissent entre elles un espace ajouré 83. L'espace ajouré 83 est en outre délimité par une portion angulaire de la semelle 51 et une portion angulaire de la paroi intermédiaire 63. La partie intercalaire 54 présente donc, comme dans le premier mode de réalisation, une structure évidée. Dans le second mode de réalisation, la structure évidée prend la forme des espaces ajourés 83 s'ouvrant sur l'une et l'autre des deux faces principales du pneumatique 5. Par faces principales, on entend définir les deux plans parallèles entre eux, perpendiculaires à l'axe XX, éloignés l'un de l'autre de l'encombrement en largeur L_{P} et qui délimitent le gabarit du pneumatique 5.

Comme cela est visible en figure 7, lorsque le pneumatique 5 est au repos, les liaisons 81 s'étendent sensiblement dans un plan perpendiculaire à l'axe XX, c'est-à-dire sensiblement entre les deux faces principales précitées. Contrairement à des rayons au sens classique du terme, l'orientation de chaque liaison 81 forme un angle non nul avec des directions radiales du pneumatique 5.

Dans l'exemple décrit ici, les liaisons 81 sont au nombre de quinze. Les liaisons 81 adjacentes sont équidistantes les unes des autres. Ainsi, l'homogénéité du comportement en roulage est améliorée. Géométriquement, chaque liaison 81 est le résultat d'une rotation plane d'une autre liaison 81 autour de l'axe XX. Chaque liaison 81 présente une forme légèrement courbe, orientée selon le plan principal du pneumatique XX et courbée dans le même sens autour de l'axe XX que les autres liaisons 81. Ensemble, les liaisons 81 présentent une configuration générale en spirale ou en hélice partielle. Dans l'exemple décrit ici, le pneumatique 5 est prévu pour rouler dans le sens horaire selon la représentation de la figure 7. Le pneumatique 5 présente alors un sens de montage recommandé.

En toute hypothèse et d'un point de vue fonctionnel, les liaisons 81 du second mode de réalisation sont les analogues des parties internes 59 et 60 des flancs 55 et 56 du premier mode de réalisation et les espaces ajourés 83 du second mode de réalisation sont les analogues de l'espace annulaire 67 du premier mode de réalisation.

Dans l'exemple du second mode de réalisation représenté sur les figures 6 à 9, à l'état au repos, le pneumatique 5 présente :
- un diamètre intérieur D compris entre 50 et 160 millimètres, par exemple environ 120 millimètres,
- un diamètre extérieur D' compris entre 250 et 350 millimètres, par exemple environ 300 millimètres,
- un encombrement en largeur L_{P} compris entre 25 et 40 millimètres, par exemple environ 30 millimètres,
- une bande de roulement 53 d'épaisseur e₅₃ comprise entre 4 et 8 millimètres, par exemple environ 6 millimètres, et de largeur L₅₃ comprise entre 12 et 20 millimètres, par exemple environ 17 millimètres,
- une enveloppe externe de hauteur E comprise entre 30 et 40 millimètres, par exemple environ 35 millimètres,
- une paroi intermédiaire 63 d'épaisseur e₆₃ sensiblement égale à celle de la bande de roulement 53,
- des flancs 55, 56 d'épaisseur e₅₅, e₅₆ comprise entre 4 et 8 millimètres, par exemple environ 5 millimètres, et
- une section de hauteur H comprise entre 80 et 100 millimètres, par exemple environ 90 millimètres, hors talon 61.

L'encombrement en largeur L_{R} du corps de roue 3 non représenté du second mode de réalisation est sensiblement équivalent à celui du premier mode de réalisation. L'orifice 69, similaire à celui du premier mode de réalisation mais non visible sur les figures, présente un alésage sensiblement cylindrique de diamètre compris entre 2 et 4 millimètres, par exemple environ 3 millimètres.

Les épaisseurs sont représentées sur les figures. Des zones de raccordement entre les différentes parties du pneumatique 5 permettent d'éviter de brusques variations d'épaisseur et d'éventuelles concentrations de contraintes qui pourraient en résulter.

Le pneumatique 5 du second mode de réalisation est, ici, réalisé par moulage et vulcanisation d'une seule pièce. Le pneumatique 5 est réalisé à base d'un unique matériau, par exemple un caoutchouc de dureté Shore A comprise entre 35 et 50, par exemple environ 43 Shore. En variante, le pneumatique 5 est réalisé à base de plusieurs matériaux et/ou par assemblage de plusieurs pièces. À l'état terminé, le pneumatique 5 est d'un seul tenant. Dans l'exemple décrit ici, les liaisons 81 présentent une section pleine.

Les valeurs dimensionnelles et de dureté Shore données ci-avant sont particulièrement adaptées au comportement dynamique souhaité par la Demanderesse dans l'application prévue. Ces valeurs pourront être adaptées individuellement ou conjointement en fonction des applications prévues. La combinaison des structures et des propriétés des matériaux permettent de sélectionner précisément les déformations souhaitées en fonction des applications.

Il est maintenant décrit le comportement dynamique, en fonctionnement, des outils agricoles selon l'un ou l'autre des deux modes de réalisation décrits ci-avant. En fonctionnement, lors du roulage du pneumatique 5 sur le sol, le comportement dynamique de l'enveloppe externe autour de la chambre 65 et le comportement dynamique de la partie intercalaire 54 se distinguent l'un de l'autre. Dans le premier mode de réalisation, la partie intercalaire 54 est formée par les parties internes 59 et 60 des flancs 55 et 56 et la paroi intermédiaire 63, tandis que dans le second mode de réalisation la partie intercalaire 54 est formée par les liaisons 81 et la paroi intermédiaire 63.

L'enveloppe externe présente une déformation limitée lors du contact de la bande de roulement 53 sur le sol, par exemple en fond de sillon. Ainsi, la forme de la bande de roulement 53 est préservée afin d'appuyer efficacement les graines en fond de sillon. En comparaison, la portion angulaire de la partie intercalaire 54 située entre l'axe XX de rotation et le sol présente un affaissement important. Par affaissement, on entend ici la déformation selon une direction radiale. La partie intercalaire 54 forme alors une zone de déformation et d'amortissement selon la direction radiale du pneumatique 5. Lors du roulage, des irrégularités dans le sol peuvent provoquer de brusques variations de contraintes subies par le pneumatique 5 dans la direction sensiblement verticale. La configuration évidée de la partie intercalaire 54 permet d'encaisser au moins en partie les variations par une déformation maîtrisée de la partie intercalaire 54. L'enveloppe externe et la bande de roulement 53 continuent d'assurer la fonction d'enfouissement de graine.

La Demanderesse a constaté qu'un encombrement en largeur inférieur à 50 millimètres permettait un travail au fond de la plupart des sillons formés par les machines actuelles. Une largeur inférieure à 35 ou à 30 millimètres permet de travailler dans des sillons plus spécifiques à certaines cultures en travaillant sur une surface de contact restreinte, ce qui permet de générer une force d'appuyage plus importante et/ou une pénétration plus profonde dans le fond du sillon.

L'affaissement de la partie intercalaire 54 est plus important que l'affaissement de l'enveloppe externe. Ceci est rendu possible grâce à la configuration évidée du pneumatique. Le pneumatique présente une zone à affaissement privilégié. Lorsqu'une force de compression est appliquée entre la bande de roulement et la semelle du pneumatique, une partie de la matière constituant la partie intercalaire 54 vient occuper l'espace laissé libre de ladite partie intercalaire 54. Dans le premier mode de réalisation, les parties internes 59 et 60 des flancs 55 et 56 viennent occuper en partie l'espace annulaire 67. Dans le second mode de réalisation, les liaisons 81 viennent occuper en partie les espaces ajourés 83.

La structure évidée permet, en outre, de guider la déformation de la partie intercalaire 54. En particulier, les parties déformées restent inscrites dans un encombrement en largeur restreint. Notamment, la paroi intermédiaire 63 retient les deux flancs 55, 56 à proximité l'un de l'autre. Elle évite leur écartement mutuel. Une expansion en largeur est ainsi évitée. Lorsque l'affaissement a lieu dans un sillon, le risque de venir racler et de dégrader les parois latérales du sillon est donc réduit. L'encombrement en largeur de la partie intercalaire 54 reste inférieur à l'encombrement de l'enveloppe externe du pneumatique, y compris lors de l'affaissement maîtrisé.

En d'autres termes, la structure évidée permet à la fois de privilégier l'affaissement de la partie intercalaire 54 plutôt que l'affaissement de l'enveloppe externe, et à la fois d'éviter que ledit affaissement entraîne l'élargissement du pneumatique 5.

Dans les pneumatiques utilisés jusqu'à maintenant, il était fréquent qu'un déséquilibre apparaisse entre un côté et l'autre du pneumatique. Le pneumatique adoptait alors un comportement de flambage. De manière imagée, la section des pneumatiques fléchissait d'un côté en prenant la forme d'une banane. Ceci conduisait à dégrader les sillons dans lesquels évoluaient les pneumatiques. La structure évidée du pneumatique représenté sur les figures permet, au contraire, d'améliorer la symétrie du comportement dynamique. En guidant la déformation des flancs 55, 56 vers le plan médian du pneumatique 5 ou en guidant la déformation des liaisons 81 dans le plan principal du pneumatique 5, le risque d'apparition d'un déséquilibre entre un côté et l'autre du pneumatique 5 est réduit. Le risque de flambage du pneumatique 5 est également réduit.

Dans le second mode de réalisation, la forme légèrement courbée des liaisons 81 impose le sens de la flexion sous l'effet d'une compression. En particulier, les liaisons 81 fléchissent dans le plan principal du pneumatique 5, c'est-à-dire selon une direction perpendiculaire à l'axe XX. Elles fléchissent toutes dans le même sens sans s'entraver mutuellement.

La semelle 51 et la bande de roulement 53 sont peu déformables en comparaison de la partie intercalaire 54. L'affaissement localisé de la partie intercalaire 54 permet un rapprochement mutuel de la semelle 51 et de la bande de roulement 53. Cet affaissement a lieu dans la portion angulaire du pneumatique 5 la plus proche du sol et soumise au poids de l'outil 1. Par conséquent, la forme généralement annulaire de la semelle 51 est décentrée par rapport à la forme annulaire déformée de la bande de roulement 53 lors du roulage. Sous l'effet de l'affaissement, l'axe de rotation XX descend vers le sol. L'affaissement permet d'améliorer la mobilité de la bande de roulement 53 par rapport à l'axe XX tout en limitant sa propre déformation.

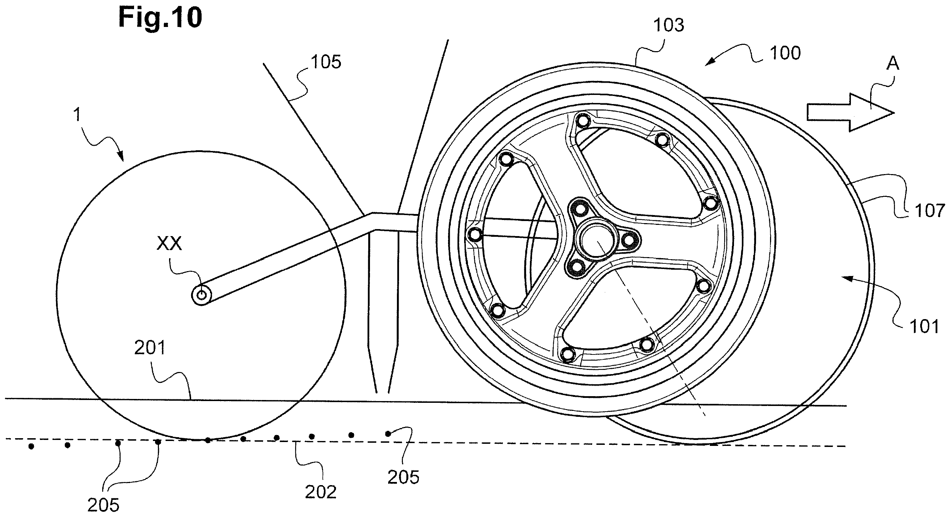

La figure 10 représente schématiquement un semoir 100 et l'organisation des outils l'équipant. La flèche A représente la direction d'avancée du semoir 100 sur la surface du sol 201. Le semoir 100 est équipé d'un organe de tête 101, de roues porteuses 103, d'un organe de dépôt 105 de graines 205 et d'un outil 1 selon l'invention, ici sous forme d'une roue de plombage.

L'organe de tête 101 comprend, ici, deux disques 107. Les deux disques 107 sont disposés en un profil en "V" et sont agencés pour ouvrir d'abord un sillon dans le sol 201. Le trait tireté 202 représente le fond du sillon formé par l'organe de tête 101.

Les roues porteuses 103 supportent au moins en partie le poids du semoir 101 de part et d'autre du sillon. Les roues porteuses 103 forment en outre des roues de jauges pour régler la profondeur du sillon. Les roues porteuses 103 sont libres en rotation mais solidaire des disques 107 selon une direction sensiblement verticale. Ainsi, même en présence de dénivelés dans un champ, les disques 107 travaillent à une profondeur sensiblement constante par rapport à la surface du sol 201.

L'organe de dépôt 105 est agencé pour amener les graines 205 au fond 202 du sillon, derrière l'organe de tête 101.

L'outil 1 sous forme de roue de plombage vient enfoncer les graines 205 dans le fond 202 du sillon.

Dans des variantes, une ou plusieurs roues de queue ferment le sillon et/ou tassent la terre derrière l'outil 1 (à gauche de la figure 10).

L'invention ne se limite pas aux exemples d'outils agricoles décrits ci-avant, seulement à titre d'exemple, mais elle englobe toutes les variantes que pourra envisager l'homme de l'art dans le cadre des revendications ci-après.

## Revendications

1. Outil agricole (1) du type comprenant un pneumatique (5) d'un seul tenant incluant une partie radialement extérieure comprenant une bande de roulement (53) et deux flancs (55, 56) et une partie radialement intérieure comprenant une semelle (51) par l'intermédiaire de laquelle le pneumatique (5) se monte sur un corps de roue (3), **caractérisé en ce que** :
- le pneumatique (5) comporte en outre une partie intercalaire (54) qui correspond avec la semelle à la partie radialement intérieure, agencée entre la bande de roulement (53) et la semelle (51),
cette partie intercalaire (54) comprenant une paroi intermédiaire (63) sensiblement annulaire, s'étendant entre la bande de roulement (53) et la semelle (51) et reliant les deux flancs (55, 56) l'un à l'autre de manière à former avec la bande de roulement (53) et les deux flancs (55, 56) une enveloppe autour d'une chambre (65), qui correspond à la partie radialement extérieure du pneumatique (5), tandis que le reste de la partie intercalaire (54) relie la paroi intermédiaire (63) à la semelle (51), la partie intercalaire (54) présentant un encombrement en largeur inférieur ou égal à celui de l'enveloppe,
la partie intercalaire (54) présente une structure évidée comprenant un espace creux (67) ou plusieurs espaces ajourés (83), ladite structure évidée étant située radialement sous l'enveloppe et délimitée par la paroi intermédiaire (63) et la semelle (51), et configurée de manière qu'une partie de la matière constituant la partie intercalaire (54) vienne occuper en partie ledit espace creux (67) ou lesdits espaces ajourés (83) lorsqu'un effort de compression est appliqué entre la bande de roulement (53) et la semelle (51) de sorte que la partie intercalaire (54) s'affaisse plus que l'enveloppe tout en conservant un encombrement en largeur inférieur ou égal à celui de l'enveloppe lorsque ledit effort de compression est appliqué sur la bande de roulement.

2. Outil agricole (1) selon l'une des revendications précédentes, dans lequel l'encombrement en largeur de l'enveloppe du pneumatique (5) est inférieur à 50 millimètres.

3. Outil agricole (1) selon l'une des revendications précédentes, dans lequel les deux flancs (55, 56) comprennent chacun une partie interne (59 ; 60) et une partie externe (57 ; 58),
la partie externe (57 ; 58) délimitant en partie l'enveloppe,
la partie interne (59 ; 60) appartenant à la partie intercalaire (54) et reliant l'enveloppe à la semelle (51) en s'étendant dans le prolongement de la partie externe (57 ; 58) respective,
la semelle (51), la partie interne (59 ; 60) de chacun des deux flancs (55, 56) et une partie de l'enveloppe définissant conjointement un espace annulaire (67) de la structure évidée.

4. Outil agricole (1) selon la revendication 3, dans lequel la partie interne (59 ; 60) de chacun des deux flancs (55, 56) présente une configuration agencée pour fléchir vers l'espace annulaire (67) sous l'effet d'une charge lors du fonctionnement.

5. Outil agricole (1) selon l'une des revendications 1 ou 2, dans lequel la partie intercalaire (54) comprend des liaisons (81) en forme de rayons reliant chacune la semelle (51) à l'enveloppe.

6. Outil agricole (1) selon la revendication 5, dans lequel les liaisons (81) sont réparties dans la circonférence du pneumatique (5) et espacées les unes des autres, deux liaisons (81) adjacentes, la semelle (51) et une portion de l'enveloppe formant conjointement un espace ajouré (83) de la structure évidée.

7. Outil agricole (1) selon l'une des revendications 5 et 6, dans lequel chacune des liaisons (81) présente une configuration agencée pour fléchir vers un espace ajouré (83) du pneumatique (5) sous l'effet d'une charge lors du fonctionnement.

8. Semoir comprenant au moins un outil agricole (1) selon l'une des revendications précédentes et pour lequel le pneumatique (5) est monté sur un corps de roue (3).

## Patentansprüche

1. Landwirtschaftliches Werkzeug (1) in der Art einen einstückigen Reifen (5) umfassend, der einen radial außenliegenden Teil, der eine Lauffläche (53) und zwei Flanken (55, 56) umfasst, und einen radial innenliegenden Teil, der eine Fußplatte (51) umfasst, beinhaltet, über die der Reifen (5) auf einen Radkörper (3) montiert wird,
**dadurch gekennzeichnet, dass**:
- der Reifen (5) weiter einen Zwischenteil (54) beinhaltet, der mit der Fußplatte dem radial innenliegenden Teil entspricht, der zwischen der Lauffläche (53) und der Fußplatte (51) angeordnet ist,
wobei dieser Zwischenteil (54) eine im Wesentlichen ringförmige Zwischenwand (63) umfasst, die sich zwischen der Lauffläche (53) und der Fußplatte (51) erstreckt und die beiden Flanken (55, 56) miteinander verbindet, um mit der Lauffläche (53) und den beiden Flanken (55, 56) eine Hülle um eine Kammer (65) zu bilden, die dem radial außenliegenden Teil des Reifens (5) entspricht, während der Rest des Zwischenteils (54) die Zwischenwand (63) mit der Fußplatte (51) verbindet, wobei der Zwischenteil (54) einen Platzbedarf in der Breite aufweist, der kleiner oder gleich dem der Hülle ist,
der Zwischenteil (54) eine vertiefte Struktur aufweist, die einen Hohlraum (67) oder mehrere Lochräume (83) umfasst, wobei die vertiefte Struktur radial unter der Hülle liegt und von der Zwischenwand (63) und der Fußplatte (51) begrenzt ist, und so konfiguriert ist, dass ein Teil des den Zwischenteil (54) bildenden Materials den Hohlraum (67) oder die Lochräume (83) teilweise einnimmt, wenn eine Druckkraft zwischen der Lauffläche (53) und der Fußplatte (51) aufgebracht wird, sodass der Zwischenteil (54) mehr als die Hülle einsinkt und dabei einen Platzbedarf in der Breite beibehält, der kleiner oder gleich der Breite der Hülle ist, wenn die Druckkraft auf die Lauffläche aufgebracht wird.

2. Landwirtschaftliches Werkzeug (1) nach einem der vorstehenden Ansprüche, wobei der Platzbedarf in der Breite der Hülle des Reifens (5) weniger als 50 Millimeter beträgt.

3. Landwirtschaftliches Werkzeug (1) nach einem der vorstehenden Ansprüche, wobei die beiden Flanken (55, 56) jeweils einen Innenteil (59; 60) und einen Außenteil (57; 58) umfassen,
der Außenteil (57; 58) die Hülle teilweise abgrenzt, der Innenteil (59; 60) zum Zwischenteil (54) gehört und die Hülle mit der Fußplatte (51) verbindet, indem er sich in Verlängerung des jeweiligen Außenteils (57; 58) erstreckt,
die Fußplatte (51), der Innenteil (59; 60) jeder der beiden Flanken (55, 56) und ein Teil der Hülle gemeinsam einen Ringraum (67) der vertieften Struktur definieren.

4. Landwirtschaftliches Werkzeug (1) nach Anspruch 3, wobei der Innenteil (59; 60) jeder der beiden Flanken (55, 56) eine Konfiguration aufweist, die angeordnet ist, um sich unter der Wirkung einer Last während des Betriebs in Richtung des Ringraums (67) durchzubiegen.

5. Landwirtschaftliches Werkzeug (1) nach einem der Ansprüche 1 oder 2, wobei der Zwischenteil (54) Verbindungen (81) in Form von Speichen umfasst, die jeweils die Fußplatte (51) mit der Hülle verbinden.

6. Landwirtschaftliches Werkzeug (1) nach Anspruch 5, wobei die Verbindungen (81) am Umfang des Reifens (5) verteilt, und in Abständen voneinander angeordnet sind, wobei zwei angrenzende Verbindungen (81), die Fußplatte (51) und ein Abschnitt der Hülle zusammen einen Lochraum (83) der vertieften Struktur bilden.

7. Landwirtschaftliches Werkzeug (1) nach einem der Ansprüche 5 und 6, wobei jede der Verbindungen (81) eine Konfiguration aufweist, die angeordnet ist, um sich unter der Wirkung einer Last während des Betriebs in Richtung eines Lochraums (83) des Reifens (5) durchzubiegen.

8. Sämaschine, die mindestens ein landwirtschaftliches Werkzeug (1) nach einem der vorstehenden Ansprüche umfasst, und bei der der Reifen (5) auf einem Radkörper (3) montiert ist.

## Claims

1. Agricultural implement (1) of the type comprising a one-piece tyre (5) including a radially outer part comprising a tread (53) and two sidewalls (55, 56) and a radially inner part comprising a tread plate (51) by which the tyre (5) is mounted on a wheel body (3), **characterised in that**:
- the tyre (5) further includes an intermediate part (54) which corresponds with the tread plate to the radially inner part, arranged between the tread (53) and the tread plate (51),
this intermediate part (54) comprising a substantially annular intermediate wall (63), extending between the tread (53) and the tread plate (51) and connecting the two sidewalls (55, 56) to one another so as to form with the tread (53) and the two sidewalls (55, 56) a casing around a chamber (65), which corresponds to the radially outer part of the tyre (5), while the remainder of the intermediate part (54) connects the intermediate wall (63) to the tread plate (51), the intermediate part (54) having a footprint with a width less than or equal to that of the casing,
the intermediate part (54) has a hollowed structure comprising a hollow space (67) or a plurality of apertures (83), said hollowed structure being located radially below the casing and delimited by the intermediate wall (63) and the tread plate (51), and configured such that part of the material constituting the intermediate part (54) partially occupies said hollow space (67) or said apertures (83) when a compressive force is applied between the tread (53) and the tread plate (51) such that the intermediate part (54) collapses more than the casing while maintaining a footprint with a width less than or equal to that of the casing when said compressive force is applied to the tread.

2. Agricultural implement (1) according to one of the preceding claims, wherein the footprint width of the tyre (5) casing is less than 50 millimetres.

3. Agricultural implement (1) according to one of the preceding claims, wherein the two sidewalls (55, 56) each comprise an inner part (59; 60) and an outer part (57; 58),
the outer part (57; 58) partially delimiting the casing,
the inner part (59; 60) belonging to the intermediate part (54) and connecting the casing to the tread plate (51) by extending as an extension of the respective outer part (57; 58),
the tread plate (51), the inner part (59; 60) of each of the two sidewalls (55, 56) and a part of the casing jointly defining an annular space (67) of the hollowed structure.

4. Agricultural implement (1) according to claim 3, wherein the inner part (59; 60) of each of the two sidewalls (55, 56) has a configuration arranged to bend towards the annular space (67) under the effect of a load during operation.

5. Agricultural implement (1) according to one of claims 1 or 2, wherein the intermediate part (54) comprises spoke-like links (81) each connecting the tread plate (51) to the casing.

6. Agricultural implement (1) according to claim 5, wherein the links (81) are distributed around the circumference of the tyre (5) and spaced apart from one another, two adjacent links (81), the tread plate (51) and a portion of the casing together forming an aperture (83) of the hollowed structure.

7. Agricultural implement (1) according to one of claims 5 and 6, wherein each of the links (81) has a configuration arranged to bend towards an aperture (83) of the tyre (5) under the effect of a load during operation.

8. Seed drill comprising at least one agricultural implement (1) according to one of the preceding claims and for which the tyre (5) is mounted on a wheel body (3) .
